# FASCICULE DE BREVET EUROPEEN

(11) **EP 1 697 454 B1**
(45) Date de publication et mention de la délivrance du brevet: **27.05.2009**
(21) Numéro de dépôt: 04816457.8
(22) Date de dépôt: 21.12.2004
(51) Int. Cl.: C08K 5/098, C08J 3/24, C08L 83/06, C09K 3/10

(54) **COMPOSITION POLYORGANOSILOXANE MONOCOMPOSANTE RETICULANT EN ELASTOMERE SILICONE**
EINKOMPONENTIGE POLYORGANOSILOXANZUSAMMENSETZUNG, DIE ZU EINEM SILIKONELASTOMER VERNETZT
POLYORGANOSILOXANE MONOCOMPONENT COMPOUND CROSSLINKING INTO SILICONE ELASTOMER

(30) Priorité: 23.12.2003 FR 0315286
(43) Date de publication de la demande: 06.09.2006
(73) Titulaire: Bluestar Silicones France SAS, 69003 Lyon (FR)
(72) Inventeur: CHAUSSADE, Marc, F-69100 Villeurbanne (FR); GUENNOUNI, Nathalie, F-69540 Irigny (FR)
(74) Mandataire: Colombet, Alain André
(86) Numéro de dépôt international: PCT/FR2004/003327
(87) Numéro de publication internationale: WO 2005/071007

(56) Documents cités:
- EP-A- 0 565 318
- EP-A- 1 108 752
- EP-A- 1 323 782
- US-A- 4 918 140

## Description

Le domaine de l'invention est celui des mastics silicones monocomposants, stables au stockage en l'absence d'humidité, et réticulant par polycondensation à température ambiante (par exemple 5 à 35°C) et en présence d'eau (par exemple humidité ambiante) pour conduire à des élastomères adhérant sur divers supports.

Les formulations des élastomères réticulant par polycondensation font généralement intervenir une huile silicone, généralement polydiméthylsiloxane (PDMS), à terminaisons hydroxylées, éventuellement pré-fonctionnalisées par un silane de façon à présenter des extrémités -Si(OR)ₐ, un réticulant R_{b}Si(OR')_{4-b}, où b<3, un catalyseur de polycondensation, classiquement un sel d'étain ou un titanate d'alkyle, une charge de renfort et d'éventuels autres additifs comme des charges de bourrage, des promoteurs d'adhérence, des colorants, des agents biocides, etc. Lors de la réticulation, l'humidité atmosphérique permet la réaction de polycondensation, qui conduit à la formation du réseau élastomérique.

Ces élastomères peuvent être utilisés dans un large domaine d'application, comme le collage, l'étanchéité et le moulage. Ils sont notamment utilisés dans le bâtiment, en tant que moyen d'étanchéification, de jointoiement et/ou d'assemblage.

Ces élastomères silicones monocomposants à extrémités -Si(OR)ₐ sont parfois désignés sous l'appellation élastomères alcoxy. Le principal problème rencontré avec ces élastomères est la stabilité du produit lors du stockage : le catalyseur à l'étain est responsable d'un vieillissement prématuré des compositions. Nombre de travaux ont été menés dans ce domaine pour tenter d'accroître la stabilité ou de conférer des propriétés particulières au catalyseur : EP-A-1 108 752, EP-A-0 885 933, WO-A-03/018691, WO-A-03/035761, US-A-4 554 338, US-A-5 519 104 et US-A-4 749 766.

Des catalyseurs de polycondensation classiques comprennent des composés de dialkylétain, notamment des dicarboxylates de dialkylétain tels que le dilaurate et le diacétate de dibutylétain, les composés de titanate d'alkyle tels que le tétrabutyl ou le tétraisopropyltitanate, les chélates de titane (EP-A-0 885 933, US-5 519 104, US-A-4,515,932, US-A-4,563,498, US-A-4,528,353).

Des solutions plus complexes ont été proposées, avec des mélanges de catalyseurs, comme dans US-A-4,749,766, qui décrit des mélanges d'un diorganoétain bis(beta-dicétonate) et d'un composé d'organoétain (IV) dépourvu de fonctionnalité beta-dicétonate, pouvant être sélectionné parmi de nombreuses structures chimiques mono-étain, di-étain et distannoxane Des exemples avec le composé classique dilaurate de di-n-butylétain seul ou combiné à un chélate d'étain sont décrits. Lors d'un vieillissement de 329 heures à 70°C, les compositions ne comportant que du dilaurate de di-n-butylétain présentent un réel défaut de stabilité. En revanche, les compositions comprenant les deux espèces catalytiques présentent, dans les mêmes conditions de vieillissement accéléré, une meilleure stabilité.

US-A-5 519 104 décrit aussi des combinaisons de deux catalyseurs à l'étain de la classe des R₂Sn(dicarboxylates), et notamment l'utilisation simultanée de diacétate et de dilaurate de dibutylétain.

Une autre piste de recherche a été le développement de nouveaux composés de l'étain. EP-A-1 108 752 et WO-A-03/018691 décrivent des composés de l'étain du type R₂Sn(OR')₂ ou R₂SnOSn(OR')₂.

Des essais conduits par le demandeur à partir du catalyseur classique dilaurate de dibutylétain et de catalyseurs proposés dans EP-A-1 108 752, conduisent ainsi à des compositions qui ne sont pas stables au stockage, et ne permettent donc pas de garantir la réticulation après plusieurs mois de stockage. II a notamment été constaté une absence de réticulation après 6 mois de stockage.

L'objectif de l'invention a été dès lors de trouver des catalyseurs à l'étain permettant d'obtenir un excellent compromis entre cinétique de réticulation et stabilité au stockage.

Un objectif important était de proposer des catalyseurs susceptibles d'apporter à eux seuls ces propriétés, et donc de pouvoir éviter le recours à des mélanges de catalyseurs, qui augmentent la complexité du procédé et les coûts de production.

Un objectif particulier de l'invention est de proposer des catalyseurs permettant de produire des compositions ayant une stabilité dépassant les 6 mois.

Ces objectifs, ainsi que d'autres, sont atteints par l'utilisation, dans une composition d'élastomère silicone monocomposant alcoxy, d'un catalyseur à l'étain C de formule (C) : 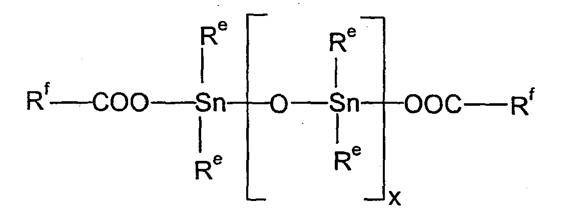 formule dans laquelle :
- R^{e}, identiques ou différents, représentent un radical alkyle linéaire ou ramifié en C₁-C₈, de préférence en C₄,
- x est 0 ou 1,
- lorsque x est 1, R^{f}, identiques ou différents, représentent un radical alkyle linéaire ou ramifié, saturé ou insaturé, en C₁-C₂₅, de préférence en C₁-C₁₅, comportant éventuellement un ou plusieurs atomes d'oxygène, et éventuellement comportant une ou plusieurs fonctions ester ou éther ; peut s'écrire formule C1 : [R^{e}₂Sn(OOC-R^{f})]₂O,
- lorsque x est 0, R^{f}, identiques ou différents, représentent un radical hétéroalkyle linéaire ou ramifié, saturé ou insaturé, en C₁-C₂₅, de préférence en C₁-C₁₅, comportant un ou plusieurs O, et éventuellement comportant une ou plusieurs fonctions ester ou éther ; peut s'écrire formule C2: R^{e}₂Sn(OOCR^{f})₂,
le catalyseur étant présent en quantité correspondant à de 0,05 à 0,35 mmol d'étain pour 100 g de composition, de préférence de 0,15 à 0,32.

Les catalyseurs suivants constituent chacun des modes de réalisation préférés (Bu = butyl) :
- [R^{e}₂Sn(OOC-C₁₁H₂₃)]₂O, de préférence [Bu₂Sn(OOC-CnH₂₃)]_{2O}
- Re²Sn[OOCCH₂(OCH2CH₂)₃OCH3]_{2,} de préférence Bu₂Sn[OOCCH₂(OCH₂CH₂)₃OCH₃]₂
- R^{e}₂Sn(OOCCH=CHCOOR)₂, de préférence Bu₂Sn(OOCCH=CHCOOR)₂, R étant un radical alkyl en C₂-C₈, éventuellement ramifié ; il peut s'agir d'un mélange de telles molécules comportant des radicaux R ayant des nombres de C différents, compris entre 2 et 8.

L'utilisation de l'un de ces catalyseurs dans les proportions ci-dessus définies permet d'obtenir à elle seule un excellent compromis entre cinétique de réticulation et stabilité au stockage, avec par exemple la production de compositions ayant une stabilité dépassant les 6 mois, c'est-à-dire que ces compositions, après un stockage de longue durée, sont encore capables de réticuler convenablement. Bien entendu, l'utilisation dans une même composition d'un mélange d'au moins deux d'entre eux reste dans le cadre de l'invention.

La préparation des composés organiques de l'étain est connue. On peut citer les références suivantes: Main Group Metal Chemistry, 25(10), 635-642, 2002 ; Journal of Organometallic Chemistry, 430(2), 167-73, 1992; Journal of Organometallic Chemistry, 412(1-2), 39-45, 1991; Journal of Organometallic Chemistry, 372(2), 193-9, 1989; Tetrahedron, 45(4), 1219-29, 1989; Journal of Organometallic Chemistry, 311(3), 281-8, 1986; Synthesis and Reactivity in Inorganic and Metal-Organic Chemistry, 32(8), 1373-1392, 2002; Chinese Journal of Chemistry, 19(11), 1141-1145, 2001; Synthesis and Reactivity in Inorganic and Metal-Organic Chemistry, 30(9), 1715-1729, 2000; Zeitschrift für Kristallographie, 214(11), 758-762, 1999; Applied Organometallic Chemistry, 7(1), 39-43, 1993; Journal of Organometallic Chemistry, 430(2), 139-48, 1992, GB-A-1 009 368.

L'invention a donc pour objet une composition polyorganosiloxane (POS) monocomposante stable au stockage en l'absence d'humidité et réticulant, en présence d'eau, en élastomère, composition comprenant au moins un polyorganopolysiloxane POS linéaire réticulable, une charge minérale et un catalyseur de réticulation tel que décrit ci-dessus en quantité correspondant à de 0,05 à 0,35 mmol d'étain pour 100 g de composition, de préférence de 0,15 à 0,32.

Dans un mode de réalisation préféré, ladite composition est caractérisée en ce qu'elle comprend :
**-A-** au moins un polyorganopolysiloxane linéaire réticulable **A** de formule (A): 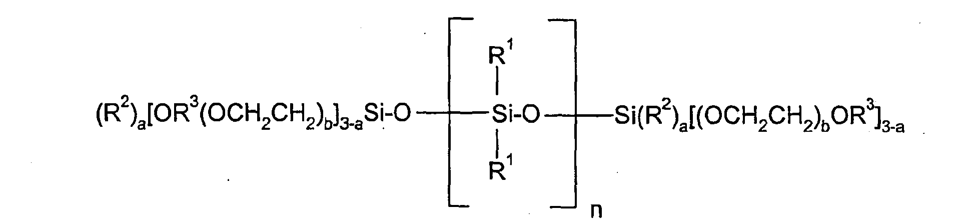 dans laquelle :
   - les substituants R¹, identiques ou différents, représentent chacun un radical monovalent hydrocarboné saturé ou non en C₁ à C₁₃, substitué ou non substitué, aliphatique, cyclanique ou aromatique ;
   - les substituants R², identiques ou différents, représentent chacun un radical monovalent hydrocarboné saturé ou non en C₁ à C₁₃, substitué ou non substitué, aliphatique, cyclanique ou aromatique ;
   - les substituants R³, identiques ou différents, représentent chacun un radical alkyle, linéaire ou ramifié, en C₁ à C₈ ou un cycloalkyle en C₃ à C₈
   - n a une valeur suffisante pour conférer au POS **A** une viscosité dynamique à 25°C allant de 500 à 1.000.000 mPa.s ;
   - a est zéro ou 1 ;
   - b est zéro ou 1 ;
**-B-** éventuellement au moins une résine polyorganosiloxane **B** fonctionnalisée par au moins un radical alcoxy (OCH₂CH₂)_{b}OR³ avec b et R³ répondant à la définition donnée supra et présentant, dans sa structure, au moins deux motifs siloxyles différents choisis parmi ceux de formules (R¹)₃SiO_{1/2} (motif M), (R¹)₂SiO_{2/2} (motif D), R¹SiO_{3/2} (motif T) et SiO₂ (motif Q), l'un au moins de ces motifs étant un motif T ou Q, les radicaux R¹, identiques ou différents, ayant les significations données supra à propos de la formule **(A),** ladite résine ayant une teneur pondérale en radicaux (OCH₂CH₂)_{b}OR³ allant de 0,1 à 10 %, étant entendu qu'une partie des radicaux R¹ sont des radicaux (OCH₂CH₂)_{b}OR³ ;
**-C-** un catalyseur de réticulation selon l'invention;
**-D-** éventuellement au moins un réticulant D de formule :

   (R²)ₐSi [(OCH₂CH₂)_{b}OR³]₄₋ₐ

   avec R², R³, a et b tels que définis ci-dessus,
-E- éventuellement au moins un polydiorganosiloxane E linéaire non réactif et non fonctionnalisé de formule : 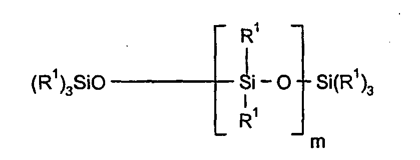 dans laquelle :
   - les substituants **R¹,** identiques ou différents, ont les mêmes significations que celles données ci-avant pour le polyorganosiloxane **A ;**
   - m a une valeur suffisante pour conférer au polymère E une viscosité dynamique à 25°C allant de 10 à 200.000 mPa.s ;
**-F-** une charge minérale **F,** notamment charge de renfort et/ou de bourrage, de préférence à base de silice ;
**-H-** éventuellement au moins un agent auxiliaire **H.**

La composition selon l'invention correspond à une forme de réalisation dans laquelle le constituant essentiel, à savoir le POS **A** est fonctionnalisé au niveau de ses extrémités par des radicaux alcoxy. Ces POS **A** fonctionnalisés correspondent à une forme stable en l'absence d'humidité, du mastic monocomposant ici considéré. En pratique, cette forme stable est celle de la composition conditionnée en cartouches hermétiquement fermées, qui seront ouvertes par l'opérateur lors de l'utilisation et qui lui permettront d'appliquer le mastic sur tous les supports souhaités.

L'état de l'art offre différentes voies d'obtention de ces composés. A titre d'exemple, le POS **A** peut être porteur de fonctions hydroxyles (précurseur hydroxylé **A'),** et l'on peut faire réagir ces fonctions avec un silane réticulant **D** suivant un processus de condensation. Le précurseur hydroxylé **A'** du POS **A** fonctionnalisé alcoxy peut être un polydiorganosiloxane α,ω-hydroxylé de formule 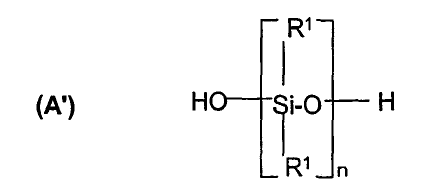 avec R¹ et n tel que défini ci-dessus dans la formule (A).

L'éventuelle résine POS **B** fonctionnalisée alcoxy peut être produite de la même façon que le POS **A** fonctionnalisé alcoxy, par condensation avec un silicone réticulant **D** porteur de radicaux de fonctionnalisation alcoxy.

Le précurseur de la résine POS **B** alcoxy peut être une résine POS **B'** hydroxylée répondant à la définition donnée ci-dessus pour **B** à la différence qu'une partie des radicaux R¹ correspondent à des OH.

Parmi les auxiliaires **H** ou additifs particulièrement intéressants pour la composition selon l'invention, on citera les promoteurs d'adhérence et les additifs favorisant la stabilité des compositions.

Ainsi la composition POS de mastic monocomposant selon l'invention comprendra de préférence au moins un promoteur d'adhérence **H1** aminé ou non, de préférence un composé organosilicique, de préférence un silane, portant à la fois :
(1) un ou des groupes hydrolysables liés à l'atome de silicium et
(2) un ou des groupes organiques comportant des radicaux choisis dans le groupe des radicaux aminés (ou diaminés), (méth)acrylate, époxy, alcényle (typiquement de 2 à 6 C) et/ou alkyle (typiquement de 1 à 8 C).
   A titre d'exemples, on peut utiliser l'un des silanes suivants, ou un mélange d'au moins deux d'entre eux :
   - le 3-aminopropyltriéthoxysilane,
   - le beta-aminoéthyl-gamma-aminopropyltriméthoxysilane
   - le beta-aminoéthyl-gamma-aminopropylméthyldiméthoxysilane
   - le 3-aminopropyltriméthoxysilane,
   - le vinyltriméthoxysilane,
   - le 3-glycidyloxypropyl-triméthoxysilane,
   - le 3-méthacryloxypropyltriméthoxysilane,
   - le propyltriméthoxysilane,
   - le méthyltriméthoxysilane,
   - l'éthyltriméthoxysilane,
   - le vinyltriéthoxysilane,
   - le 3-aminopropylméthyldiméthoxysilane,
   - le 3-aminopropylméthyldiéthoxysilane,
   - le méthyltriéthoxysilane,
   - le propyltriéthoxysilane,
   - le tétraéthoxysilane,
   - le tétrapropoxysilane,
   - le tétraisopropoxysilane,
ou des oligomères polyorganosiloxaniques contenant de tels groupes organiques à une teneur supérieure à 20%.

On peut aussi utiliser comme promoteur d'adhérence un silicate portant un ou des groupes hydrolysables, notamment groupes alkyles, typiquement de 1 à 8 C. On peut citer les silicates de propyle, les silicates d'isopropyle et les silicates d'éthyle. Les silicates peuvent être polycondensés ou non.

Elle pourra également comporter un additif de stabilité **H2** (en plus de **H1** ou non) dont le but sera de réagir avec l'eau résiduelle contenue dans la cartouche ou y ayant pénétré par défaut d'étanchéité de celle-ci. On retiendra de préférence l'hexaméthyldisilazane, le vinyltriméthoxysilane et leur mélange.

Pour détailler un peu plus la nature des éléments constitutifs de la composition selon l'invention, il importe de préciser que les substituants R¹ des polymères POS **A,** des résines **B** et des polymères **E** facultatifs peuvent être sélectionnés dans le groupe formé par :
- les radicaux alkyles et halogénoalkyles ayant de 1 à 13 atomes de carbone,
- les radicaux cycloalkyles et halogénocycloalkyles ayant de 5 à 13 atomes de carbone,
- les radicaux alcényles ayant de 2 à 8 atomes de carbone,
- les radicaux aryles et halogénoaryles mononucléaires ayant de 6 à 13 atomes de carbone,
- les radicaux cyanoalkyles dont les chaînons alkyles ont de 2 à 3 atomes de carbone,
les radicaux méthyle, éthyle, propyle, isopropyle, n-hexyle, phényle, vinyle et 3,3,3-trifluoropropyle étant particulièrement préférés.

Plus précisément encore, et à titre non limitatif, les substituants R¹ mentionnés ci-dessus pour les polymères POS **A** et **E** (facultatifs) comprennent :
- les radicaux alkyles et halogénoalkyles ayant de 1 à 13 atomes de carbone tels que les radicaux méthyle, éthyle, propyle, isopropyle, butyle, pentyle, hexyle, éthyl-2 hexyle, octyle, décyle, trifluoro-3,3,3 propyle, trifluoro-4,4,4 butyle, pentafluoro-4,4,4,3,3 butyle,
- les radicaux cycloalkyles et halogénocycloalkyles ayant de 5 à 13 atomes de carbone tels que les radicaux cyclopentyle, cyclohexyle, méthylcyclohexyle, propylcyclohexyle, difluoro-2,3 cyclobutyle, difluoro-3,4 méthyl-5 cycloheptyle,
- les radicaux alcényles ayant de 2 à 8 atomes de carbone tels que les radicaux vinyle, allyle, butène-2-yle,
- les radicaux aryles et halogénoaryles mononucléaires ayant de 6 à 13 atomes de carbone tels que les radicaux phényle, tolyle, xylyle, chlorophényle, dichlorophényle, trichlorophényle,
- les radicaux cyanoalkyles dont les chaînons alkyles ont de 2 à 3 atomes de carbone tels que les radicaux β-cyanoéthyle et γ-cyanopropyle.

A titre d'exemples concrets de motifs siloxyle D : (R¹)₂SiO_{2/2} présents dans les diorganopolysiloxanes **A** et dans les diorganopolysiloxanes non réactifs **E** facultatifs, on peut citer :

(CH₃)₂SiO,

CH₃(CH₂=CH)SiO,

CH₃(C₆H₅)SiO,

(C₆H₅)₂SiO,

CF₃CH₂CH₂(CH₃)SiO,

NC-CH₂CH₂(CH₃)SiO,

NC-CH(CH₃)CH₂(CH₂=CH)SiO,

NC-CH₂CH₂CH₂(C₆H₅)SiO.

Il doit être compris que, dans le cadre de la présente invention, on peut utiliser comme polymères fonctionnalisés **A** un mélange constitué de plusieurs polymères, qui diffèrent entre eux par la valeur de la viscosité et/ou la nature des substituants liés aux atomes de silicium. Il doit être indiqué de plus que les polymères fonctionnalisés **A** peuvent éventuellement comprendre des motifs siloxyle T de formule R¹SiO_{3/2} et/ou des motifs siloxyles Q : SiO_{4/2} , dans la proportion d'au plus 1 % (ce % exprimant le nombre de motifs T et/ou Q pour 100 atomes de silicium). Les mêmes remarques s'appliquent aux polymères **E.**

Les substituants R¹ des polymères fonctionnalisés **A** et des polymères **E** (facultatifs) avantageusement utilisés, du fait de leur disponibilité dans les produits industriels, sont les radicaux méthyle, éthyle, propyle, isopropyle, n-hexyle, phényle, vinyle et 3,3,3-trifluoropropyle. Plus avantageusement, au moins 80 % en nombre de ces substituants sont des radiaux méthyle.

On met en oeuvre des polymères fonctionnalisés **A** ayant une viscosité dynamique à 25°C allant de 500 à 1.000.000 mPa.s et, de préférence, allant de 2.000 à 200.000 mPa.s.

S'agissant des polymères **E** (facultatifs), ils présentent une viscosité dynamique à 25°C allant de 10 à 200.000 mPa.s et, de préférence allant de 50 à 150.000 mPa.s.

Les polymères **E,** quand on les utilise, peuvent être introduits en totalité ou en plusieurs fractions et à plusieurs stades ou à un seul stade de la préparation de la composition.

Les éventuelles fractions peuvent être identiques ou différentes en termes de nature et/ou de proportions. De préférence, **E** est introduit en totalité à un seul stade.

Comme exemples de substituants R¹ des résines POS **B** qui conviennent ou qui sont avantageusement utilisés, on peut citer les divers radicaux R¹ du type de ceux mentionnés nommément ci-avant pour les polymères fonctionnalisés **A.** Ces résines silicones sont des polymères polyorganosiloxanes ramifiés bien connus dont les procédés de préparation sont décrits dans de nombreux brevets. Comme exemples concrets de résines utilisables, on peut citer les résines MQ, MDQ, TD et MDT.

De préférence, comme exemples de résines utilisables, on peut citer les résines POS **B** ne comprenant pas, dans leur structure, de motif Q. De manière plus préférentielle, comme exemples de résines utilisables, on peut citer les résines TD et MDT fonctionnalisées comprenant au moins 20 % en poids de motifs T et ayant une teneur pondérale en groupement alcoxy allant de 0,3 à 5 %. De manière encore plus préférentielle, on utilise des résines de ce type, dans la structure desquelles au moins 80 % en nombre des substituants R¹ sont des radicaux méthyle. Les groupements alcoxy des résines **B** peuvent être portés par les motifs M, D et/ou T.

Concernant les POS **A** fonctionnalisés et les réticulants **D,** on peut citer à titre d'exemples concrets de substituants R² qui conviennent particulièrement, les mêmes radicaux que ceux mentionnés nommément ci-avant pour les substituants R¹ des polymères **A.**

S'agissant des substituants R³, R⁴, R⁵ constitutifs des radicaux alcoxy, on mentionnera que les radicaux alkyles en C₁-C₄, tels que les radicaux méthyle, éthyle, propyle, isopropyle et n-butyle, s'avèrent plus spécialement appropriés.

Selon un mode préféré de réalisation de la composition selon l'invention, les radicaux alcoxy utilisé pour la fonctionnalisation du POS initialement hydroxylé sont issus de réticulants silanes **D** choisis dans le groupe comprenant

Si(OCH3)4

Si(OCH₂CH₃)₄

Si(OCH₂CH₂CH₃)₄

(CH₃O)₃SiCH₃

(C₂H₅O)₃SiCH₃

(CH₃O)₃Si(CH=CH₂)

(C₂H₅O)₃Si(CH=CH₂

(CH₃O)₃Si(CH₂-CH=CH₂)

(CH₃O)₃Si[CH₂-(CH₃)C=CH₂]

(C₂H₅O)₃Si(OCH₃)

Si(OCH₂-CH₂-OCH₃)₄

CH₃Si(OCH₂-CH₂-OCH₃)₃

(CH₂=CH)Si(OCH₂CH₂OCH₃)₃

C₆H₅Si(OCH₃)₃

C₆H₅Si(OCH₂-CH₂-OCH₃)_{3.}

Suivant un mode de réalisation de l'invention, la composition comprenant le POS **A** et le catalyseur, peut aussi comprendre au moins un réticulant **D** comme décrit supra.

La charge minérale **F** peut être constituée de silice amorphe sous forme d'un solide. L'état physique dans lequel se présente la silice est indifférent, c'est-à-dire que ladite charge peut se présenter sous forme de poudre, de microperles, de granulés ou de billes.

A titre de silice amorphe susceptible d'être mise en oeuvre dans l'invention, conviennent toutes les silices précipitées ou pyrogénées (ou silices de combustion) connues de l'homme de l'art. Bien entendu, on peut utiliser aussi des mélanges de différentes silices.

On préfère les silices de précipitation sous forme de poudre, les silices de combustion sous forme de poudre ou leurs mélanges ; leur surface spécifique BET est généralement supérieure à 40 m²/g et, de préférence, comprise ente 100 et 300 m²/g ; à titre plus préférentiel, on utilise les silices de combustion sous forme de poudre.

Selon une variante, la charge F peut être constituée, en plus ou à la place de la silice, par des charges blanches opacifiantes, telles que des carbonates de calcium, des oxydes de titane ou d'aluminium, voire même par des noirs de fumées.

En pratique, les charges F peuvent se présenter sous la forme de produits minéraux et/ou organiques plus grossièrement divisés, de diamètre particulaire moyen supérieur à 0,1 micron ; parmi les charges préférées figurent le quartz broyé, les silices de diatomées, le carbonate de calcium, l'argile calcinée, l'oxyde de titane du type rutile, les oxydes de fer, de zinc, de chrome, de zirconium, de magnésium, les différentes formes d'alumine (hydratée ou non), le nitrure de bore, le lithopone, le métaborate de baryum, la poudre de liège, la sciure de bois, les phtalocyanines, les fibres minérales et organiques, les polymères organiques (polytétrafluoroéthylène, polyéthylène, polypropylène, polystyrène, polychlorure de vinyle).

Ces charges peuvent être modifiées en surface, et plus spécialement les charges d'origine minérale, par traitement avec les divers composés organosiliciques ou organiques habituellement employés pour cet usage. Ainsi ces composés organosiliciques peuvent être des organochlorosilanes, des diorganocyclopolysiloxanes, des hexaorganodisiloxanes, des hexaorganodisilazanes ou des diorganocyclopolysilazanes (brevets FR 1 126 884, FR 1 136 885, FR 1 236 505, GB 1 024 234). Les charges traitées renferment, dans la plupart des cas, de 3 à 30 % de leur poids de composés organosiliciques.

L'introduction des charges a pour but de conférer de bonnes caractéristiques mécaniques et rhéologiques aux élastomères découlant du durcissement des compositions conformes à l'invention. On peut introduire une seule espèce de charges ou des mélanges de plusieurs espèces.

En combinaison avec ces charges peuvent être utilisés des pigments minéraux et/ou organiques ainsi que des agents améliorant la résistance thermique (sels et oxydes de terres rares tels que les oxydes et hydroxydes cériques) et/ou la résistance à la flamme des élastomères. Parmi les agents améliorant la résistance à la flamme peuvent être cités les dérivés organiques halogénés, les dérivés organiques du phosphore, les dérivés du platine tels que l'acide chloroplatinique (ses produits de réaction avec des alcanols, des éthers-oxydes), les complexes chlorure platineux-oléfines. Ces pigments et agents représentent ensemble au plus 20 % du poids des charges.

Selon une caractéristique préférée de l'invention, la composition POS de mastic monocomposant comporte :
- 100 parties en poids de diorganopolysiloxane(s) linéaire(s) **A,**
- de 0 à 30, de préférence de 5 à 15, parties en poids de résine(s) hydroxylée(s) **B,**
- de 2 à 15, de préférence de 3,5 à 12, parties en poids de réticulant(s) **D,**
- de 0 à 60, de préférence de 5 à 60, parties en poids de diorganopotysitoxane(s) linéaire(s) **E,**
- de 2 à 250, de préférence de 10 à 200, parties en poids de charge à base de silice et/ou de carbonate F, et
- de 0 à 20, notamment de 0,1 à 20, de préférence de 0,1 à 10, parties en poids de promoteur d'adhérence **H,**
avec au moins un catalyseur selon l'invention, présent en quantité correspondant à de 0,05 à 0,35 mmol d'étain pour 100 g de composition, de préférence de 0,15 à 0,32.

D'autres agents auxiliaires et additifs **H** usuels peuvent être incorporés à la composition selon l'invention ; ceux-ci sont choisis en fonction des applications dans lesquelles sont utilisées lesdites compositions.

Les compositions conformes à l'invention durcissent à température ambiante et notamment à des températures comprises entre 5 et 35°C en présence d'humidité.

Ces compositions peuvent être employées pour de multiples applications comme le jointoiement dans l'industrie du bâtiment, l'assemblage et le collage de matériaux les plus divers (métaux ; matières plastiques comme par exemple le PVC, le PMMA, le polycarbonate ; les caoutchoucs naturels et synthétiques ; bois ; carton ; faïence ; brique ; verre ; pierre ; béton ; éléments de maçonnerie), et ceci aussi bien dans le cadre de l'industrie du bâtiment que dans celui des industries de l'automobile, de l'électroménager et de l'électronique.

Selon un autre de ses aspects, la présente invention a également pour objet un élastomère, en particulier élastomère susceptible d'adhérer sur différents substrats, obtenu par réticulation et durcissement de la composition de mastic silicone monocomposante décrite ci-dessus. Suivant le mode de réalisation préféré, cette composition contient au moins un promoteur d'adhérence **H1** tel que défini plus haut.

Les compositions organopolysiloxanes monocomposantes conformes à la présente invention sont préparées à l'abri de l'humidité en opérant dans un réacteur fermé, muni d'une agitation, dans lequel on peut au besoin faire le vide, puis remplacer éventuellement l'air chassé par un gaz anhydre, par exemple par de l'azote.

A titre d'exemples d'appareillages, on peut citer : les disperseurs lents, les malaxeurs à pale, à hélice, à bras, à ancre, les malaxeurs planétaires, les malaxeurs à crochet, les extrudeuses à vis unique ou à plusieurs vis.

L'invention est aussi relative à l'utilisation d'un ou plusieurs catalyseurs **C,** pour la catalyse des compositions silicone réticulant par polycondensation à température ambiante (par exemple entre 5 et 35°C) et en présence d'eau (par exemple humidité ambiante), par exemple à celle de ces compositions qui sont destinées à produire des élastomères adhérant sur divers supports. Dans le mode de réalisation préféré, ce ou ces catalyseurs sont utilisés seuls pour la catalyse des compositions silicone qui sont spécifiquement décrites *supra,* à savoir élastomères silicone monocomposant alcoxy.

L'utilisation de ces catalyseurs permet d'obtenir un excellent compromis entre cinétique de réticulation et stabilité au stockage, avec par exemple la production de compositions ayant une stabilité dépassant les 6 mois, c'est-à-dire que ces compositions, après un stockage de longue durée, sont encore capables de réticuler convenablement. Les exemples qui vont suivre démontrent que ces objectifs sont atteints, et que par exemple, après 6 mois de stockage, les compositions conformes à l'invention sont aptes à réticuler à une vitesse convenable, et à conduire à un élastomère de dureté acceptable.

L'invention sera mieux comprise à l'aide des exemples non limitatifs qui suivent.

### EXEMPLES

### 1 - Exemple comparatif 1

Dans la cuve d'un mélangeur uniaxial « papillon » sont chargés 724 g d'huile **A** polydiméthylsiloxane alpha-omega-difonctionnelle (SiVi(OMe)₂) de viscosité d'environ 135000 mPa.s, 300 g d'huile polydiméthylsiloxane alpha-omega-triméthylsilylée de viscosité d'environ 100 mPa.s et 36 g de réticulant vinyltriméthoxysilane. L'ensemble est mélangé à 200 Tr/min, pendant 2 min, puis 114 g de silice Aerosil 150 de Degussa sont incorporés à vitesse d'agitation modérée (160 Tr/min), puis plus vive (4 min à 400 Tr/min) pour en achever la dispersion dans le mélange. On ajoute alors 2,88 g de dilaurate de dibutylétain (0,38 mmol d'étain/100 g de produit) et 18 g de 3-aminopropyltriéthoxysilane. Après 4 min de mélange à 400 Tr/min, on diminue la vitesse d'agitation à 130 Tr/min et on dégaze le mélange sous vide à 50 mbar. La préparation est alors transférée dans un récipient pour stockage.

### II- Exemple comparatif 2

Dans la cuve d'un mélangeur uniaxial « papillon » sont chargés 800 g d'huile **A** polydiméthylsiloxane alpha-omega-difonctionnelle (SiVi(OMe)₂) de viscosité environ 135000 mPa.s, 240 g d'huile polydiméthylsiloxane alpha-omega-triméthylsilylée de viscosité environ 100 mPa.s et 36 g de réticulant vinyltriméthoxysilane. L'ensemble est mélangé à 200 Tr/min, pendant 2 min, puis 114 g de silice Aerosil 150 de Degussa sont incorporés à vitesse d'agitation modérée (160 Tr/min), puis plus vive (4 min à 400 Tr/min) pour en achever la dispersion dans le mélange. On ajoute alors 2,6 g de catalyseur A (0,38 mmol d'étain/100 g de produit). Après 4 min de mélange à 400 Tr/min, on diminue la vitesse d'agitation à 130 Tr/min et on dégaze le mélange sous vide à 50 mbar. La préparation est alors transférée dans un récipient pour stockage.
Catalyseur A : Bu₂Sn[(OCH₂CH₂)₂OCH₃]₂ décrit dans EP-A-1 108 752.

### III - Exemple comparatif 3

Le même protocole que l'exemple 2 est suivi à la différence près de la nature et de la quantité de catalyseur: on ajoute 2,12 g de catalyseur B (0,38 mmol d'étain/100 g de produit).
Catalyseur B : Bu₂Sn[(OCH₂CH₂)N(CH₂CH₃)₂]₂ -décrit dans EP-A-1 108 752.

### IV - Exemple comparatif 4

Le même protocole que l'exemple 2 est suivi à la différence près de la nature et de la quantité de catalyseur : on ajoute 2,64 g de catalyseur C (0,38 mmol d'étain/100 g de produit).
Catalyseur C : {Bu₂[CH₃O(CH₂CH₂O)₇]Sn}₂O - décrit dans EP-A-1 108 752.

### V - Résultats pour les exemples 1 à 4 :

Dans le tableau ci-dessous la dureté est mesurée sur une éprouvette de 6 mm d'épaisseur après 1 semaine de réticulation à 23°C, 50% HR (humidité résiduelle)

| Essai | Taux d'étain (mmol/100g) | Dureté initiale, Shore A | Perte de dureté après stockage 6 mois, % | Stabilité |
|---|---|---|---|---|
| Exemple 1 | 0,38 | 15 | 100 | Non |
| Exemple 2 | 0,38 | 15 | 100 | Non |
| Exemple 3 | 0,38 | 15 | 100 | Non |
| Exemple 4 | 0,38 | 15 | 100 | Non |

Les catalyseurs testés ne conduisent pas à des compositions stables au stockage.

### VI - Exemple comparatif 5

Dans la cuve d'un mélangeur uniaxial « papillon » sont chargés 724 g d'huile **A** polydiméthylsiloxane alpha-omega-difonctionnelle (SiVi(OMe)₂) de viscosité environ 135000 mPa.s, 300 g d'huile polydiméthylsiloxane alpha-omega-triméthylsilylée de viscosité environ 100 mPa.s et 36 g de réticulant type vinyltriméthoxysilane. L'ensemble est mélangé à 200 Tr/min pendant 2 min, puis 114 g de silice Aerosil 150 de Degussa sont incorporés à vitesse d'agitation modérée (160 Tr/min), puis plus vive (4 min à 400 Tr/min) pour en achever la dispersion dans le mélange. On ajoute alors 1,92 g de dilaurate de dibutylétain (0,26 mmol d'étain/100 g de produit) et 18 g de 3-aminopropyltriéthoxysilane. Après 4 min de mélange à 400 Tr/min, on diminue la vitesse d'agitation à 130 Tr/min et on dégaze le mélange sous vide à 50 mbar. La préparation est alors transférée dans un récipient pour stockage.

### VII - Exemple 6

On reprend l'essai de l'exemple 5 en remplaçant 1,92 g de dilaurate de dibutylétain par 1,49 g (soit 0,26 mmol d'étain pour 100g de mastic) du catalyseur [(C₄H₉)₂ Sn(OOC-C₁₁H₂₃)]₂O (commercialisé par Goldschmidt sous la référence Tegokat 225).

### VIII - Exemple 7

On reprend l'essai de l'exemple 5 en remplaçant 1,92 g de dilaurate de dibutylétain par 1,73 g (soit 0,26 mmol d'étain pour 100g de mastic) du catalyseur Bu₂Sn[OOCCH₂(OCH₂CH₂)₃OCH₃]₂

### IX - Exemple comparatif 8

On reprend l'essai de l'exemple 5 en remplaçant 1,92 g de dilaurate de dibutylétain par 1,1 g (soit 0,26 mmol d'étain pour 100g de mastic) de diacétate de dibutylétain.

### X - Exemple 9

On reprend l'essai de l'exemple 5 en remplaçant 1,92 g de dilaurate de dibutylétain par 1,92 g (soit 0,26 mmol d'étain pour 100g de mastic) de maléinate-ester de dibutylétain (Metatin 725, société Acima, ou GB-A-1 009 368).

### XI - Exemple comparatif 10

On reprend l'essai de l'exemple 5 en remplaçant 1,92 g de dilaurate de dibutylétain par 1,73 g (soit 0,26 mmol d'étain pour 100g de mastic) de néodécanoate de dibutylétain.

### XII - Exemple 11

On reprend l'essai de l'exemple 1 en remplaçant 2,88 g de dilaurate de dibutylétain par 2,23 g (soit 0,38 mmol d'étain pour 100g de mastic) du catalyseur de l'exemple 6.

### XIII - Exemple 12

On reprend l'essai de l'exemple 5 en remplaçant 1,92 g de dilaurate de dibutylétain par 2,59 g (soit 0,38 mmol d'étain pour 100g de mastic) du catalyseur de l'exemple 7.

### XIV - Résultats pour les exemples 5 à 12 :

1/ Dans le tableau ci-dessous sont reportés les résultats de dureté mesurée sur une éprouvette de 6 mm d'épaisseur après 1 semaine de réticulation à 23°C, 50% HR.

| Essai | Taux d'étain (mmol/100g) | Dureté initiale, Shore A | Perte de dureté après stockage 6 mois, % | Stabilité |
|---|---|---|---|---|
| Exemple 5 | 0,26 | 16 | 100 | Non |
| Exemple 6 | 0,26 | 16 | 19 | Oui |
| Exemple 7 | 0,26 | 17 | 24 | Oui |
| Exemple 8 | 0,26 | 18 | 83 | Très faible |
| Exemple 9 | 0,26 | 13 | 8 | oui |
| Exemple 10 | 0,26 | 17 | 53 | Faible |
| Exemple 1 | 0,38 | 15 | 100 | Non |
| Exemple 11 | 0,38 | 20 | 100 | Non |
| Exemple 12 | 0,38 | 20 | 61 | Faible |

### 2/ Cinétique de prise :

| Essai | Taux d'étain (mmo)/100g ) | Ratio dureté 24h/dure té 7j Etat initial | vitesse suffisante à suffisante à l'initial | Ratio dureté 24h/dureté 7j Après 6 mois à TA | Vitesse suffisante après 6 mois |
|---|---|---|---|---|---|
| Exemple 5 | 0,26 | 69 | Oui | / | instable |
| Exemple 6 | 0,26 | 94 | Oui | 54 | Oui |
| Exemple 7 | 0,26 | 94 | Oui | 62 | Oui |
| Exemple 8 | 0,26 | 83 | Oui | 0 | Non |
| Exemple 9 | 0,26 | 65 | Oui | 47 | oui |
| Exemple 10 | 0,26 | 65 | Oui | 0 | Non |
| Exemple 1 | 0,38 | 0 | Non | / | Instable |
| Exemple 11 | 0,38 | 80 | Oui | / | Instable |
| Exemple 12 | 0,38 | 80 | Oui | 0 | Non |

### 3/ Conclusions :

Les catalyseurs selon l'invention (exemples 6, 7 et 9) améliorent la stabilité à 6 mois des compositions. Ceux des exemples 6 et 7 se révèlent les plus performants. Cependant il apparaît nécessaire de respecter une teneur maximale en catalyseur, qui est fixée à environ 0,35 mmol d'étain pour 100 g de composition.

II doit être bien compris que l'invention définie par les revendications annexées n'est pas limitée aux modes de réalisation particuliers indiqués dans la description ci-dessus, mais en englobe les variantes qui ne sortent ni du cadre ni de l'esprit de la présente invention.

## Revendications

1. Composition polyorganosiloxane (POS) monocomposante stable au stockage en l'absence d'humidité et réticulant, en présence d'eau, en élastomère, composition comprenant au moins un polyorganopolysiloxane POS alcoxy linéaire réticulable, une charge minérale et un catalyseur de réticulation C de formule (C): 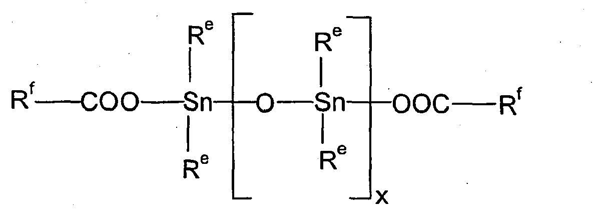 dans laquelle :
- R^{e}, identiques ou différents, représentent un radical alkyle linéaire ou ramifié en C₁-C₈
- x est 0 ou 1,
- lorsque x est 1, R^{f}, identiques ou différents, représentent un radical alkyle linéaire ou ramifié, saturé ou insaturé, en C₁-C₂₀, comportant éventuellement un ou plusieurs atomes d'oxygène, et éventuellement comportant une ou plusieurs fonctions ester ou éther,
- lorsque x est 0, R^{f}, identiques ou différents, représentent un radical hétéroalkyle linéaire ou ramifié, saturé ou insaturé, en C₁-C₂₀, comportant un ou plusieurs O, et éventuellement comportant une ou plusieurs fonctions ester ou éther,
le catalyseur étant présent en quantité correspondant à de 0,05 à 0,35 mmol d'étain pour 100 g de composition.

2. Composition selon la revendication 1, dans laquelle la quantité de catalyseur correspond à de 0,15 à 0,32 mmol d'étain pour 100 g de composition.

3. Composition selon la revendication 1 ou 2, comprenant un catalyseur de formule [Bu₂Sn(OOC-C₁₁H₂₃)]₂O.

4. Composition selon l'une des revendications 1 à 3, comprenant un catalyseur de formule B_{U2}Sn[OOCCH₂(OCH₂CH₂)₃OCH₃]₂.

5. Composition selon l'une des revendications 1 à 4, comprenant un catalyseur de formule Bu₂Sn(OOCCH=CHCOOR)₂, R étant un radical alkyl en C₂-C₈, éventuellement ramifié.

6. Composition selon la revendication 5, comprenant un mélange d'au moins deux composés de formule Bu₂Sn(OOCCH=CHCOOR)₂ comportant des radicaux R ayant des nombres d'atomes de carbone différents.

7. Composition selon l'une quelconque des revendications 1 à 6, comprenant comme unique catalyseur de réticulation, un composé de formule (C).

8. Composition selon l'une quelconque des revendications 1 à 6, dans laquelle la réticulation est catalysée par un mélange d'au moins deux composés de formule (C).

9. Composition selon l'une des revendications 1 à 8, comprenant :
-A- au moins un polyorganopolysiloxane linéaire réticulable **A** de formule : 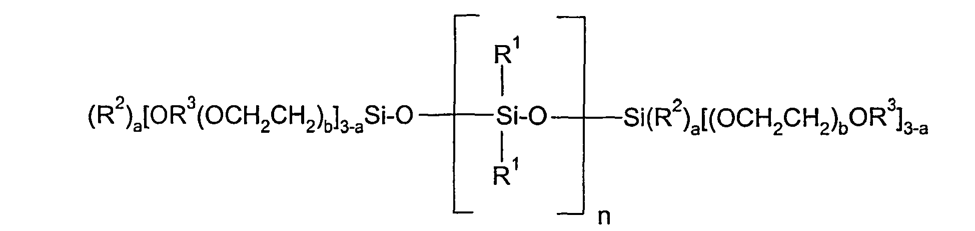 dans laquelle :
- les substituants R¹, identiques ou différents, représentent chacun un radical monovalent hydrocarboné saturé ou non en C₁ à C₁₃, substitué ou non substitué, aliphatique, cyclanique ou aromatique ;
- les substituants R², identiques ou différents, représentent chacun un radical monovalent hydrocarboné saturé ou non en C₁ à C₁₃, substitué ou non substitué, aliphatique, cyclanique ou aromatique ;
- les substituants R³, identiques ou différents, représentent chacun un radical alkyle, linéaire ou ramifié, en C₁ à C₈ ou un cycloalkyle en C₃ à C₈
- n a une valeur suffisante pour conférer au POS **A** une viscosité dynamique à 25°C allant de 1.000 à 1.000.000 mPa.s ;
- a est zéro ou 1 ;
- b est zéro ou 1
**-B-** éventuellement au moins une résine polyorganosiloxane **B** fonctionnalisée par au moins un radical alcoxy (OCH₂CH₂)_{b}OR³ avec b et R³ répondant à la définition donnée supra et présentant, dans sa structure, au moins deux motifs siloxyles différents choisis parmi ceux de formules (R¹)₃SiO_{1/2} (motif M), (R¹)₂SiO_{2/2} (motif D), R¹SiO_{3/2} (motif T) et SiO₂ (motif Q), l'un au moins de ces motifs étant un motif T ou Q, les radicaux R¹, identiques ou différents, ayant les significations données supra à propos de la formule **(A),** ladite résine ayant une teneur pondérale en radicaux (OCH₂CH₂)_{b}OR³ allant de 0,1 à 10 %, étant entendu qu'une partie des radicaux R¹ sont des radicaux (OCH₂CH₂)_{b}OR³ ;
**-C-** le catalyseur de réticulation selon l'invention;
**-D-** éventuellement au moins un réticulant D de formule :
(R²)ₐSi [(OCH₂CH₂)_{b}OR³]₄₋ₐ
avec R², R³, a et b tels que définis ci-dessus,
-E- éventuellement au moins un polydiorganosiloxane E linéaire non réactif et non fonctionnalisé de formule : 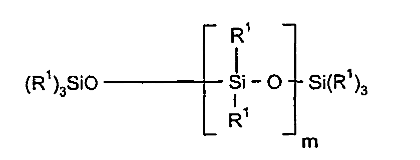 dans laquelle :
- les substituants R¹, identiques ou différents, ont les mêmes significations que celles données ci-avant pour le polyorganosiloxane **A ;**
- m a une valeur suffisante pour conférer au polymère de formule **(E)** une viscosité dynamique à 25°C allant de 10 à 200.000 mPa.s ;
**-F-** une charge minérale **F,** notamment charge de renfort et/ou de bourrage, de préférence à base de silice ;
**-H-** un promoteur d'adhérence.

10. Composition selon la revendication 9, dans laquelle le promoteur d'adhérence est un composé organosilicique, portant un ou des groupes hydrolysables liés à un atome de silicium.

11. Composition selon la revendication 10, dans laquelle le promoteur d'adhérence porte en outre un ou des groupes organiques comportant des radicaux choisis dans le groupe des radicaux aminés (ou diaminés), (méth)acrylate, époxy, alcényle et/ou alkyle.

12. Composition selon la revendication 10 ou 11, dans laquelle le promoteur d'adhérence est un silane.

13. Composition selon la revendication 12, dans laquelle le promoteur d'adhérence est choisi parmi l'un des silanes suivants, ou un mélange d'au moins deux d'entre eux :
- le 3-aminopropyltriéthoxysilane,
- le beta-aminoéthyl-gamma-aminopropyltriméthoxysilane,
- le beta-aminoéthyl -gamma-aminopropylméthyldiméthoxysilane,
- le 3-aminopropyltriméthoxysilane,
- le vinyltriméthoxysilane,
- le 3-glycidyloxypropyl-triméthoxysilane,
- le 3-méthacryloxypropyltriméthoxysilane
- le propyltriméthoxylsilane,
- le méthyltriméthoxysilane,
- l'éthyltriméthoxysilane,
- le vinyltriéthoxysilane,
- le 3-aminopropylméthyldiméthoxysilane,
- le 3-aminopropylméthyldiéthoxysilane,
- le méthyltriéthoxysilane,
- le propyltriéthoxysilane,
- le tétraéthoxysilane,
- le tétrapropoxysilane,
- le tétraisopropoxysilane,
ou des oligomères polyorganosiloxaniques contenant de tels groupes organiques à une teneur supérieure à 20 %.

14. Composition selon la revendication 9, dans laquelle le promoteur d'adhérence est un silicate.

15. Composition selon la revendication 14, dans laquelle le promoteur d'adhérence est un silicate d'éthyle, de propyle ou d'isopropyle, éventuellement polycondensé.

16. Elastomère susceptible d'adhérer sur différents substrats et obtenu par réticulation et durcissement de la composition selon l'une quelconque des revendications précédentes, contenant un promoteur d'adhérence.

17. Utilisation d'au moins un composé de l'étain C de formule (C): 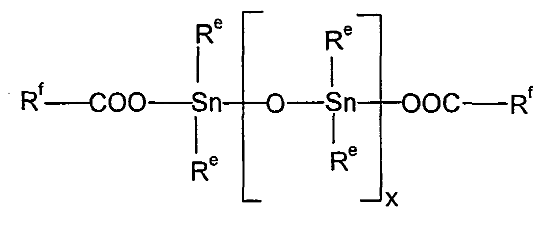 dans laquelle :
- R^{e}, identiques ou différents, représentent un radical alkyle linéaire ou ramifié en C₁-C₈
- x est 0 ou 1,
- lorsque x est 1, R^{f}, identiques ou différents, représentent un radical alkyle linéaire ou ramifié, saturé ou insaturé, en C₁-C₂₀, comportant éventuellement un ou plusieurs atomes d'oxygène, et éventuellement comportant une ou plusieurs fonctions ester ou éther,
- lorsque x est 0, R^{f}, identiques ou différents, représentent un radical hétéroalkyle linéaire ou ramifié, saturé ou insaturé, en C₁-C₂₀, comportant un ou plusieurs O, et éventuellement comportant une ou plusieurs fonctions ester ou éther,
comme catalyseur de réticulation par polycondensation, d'une composition d'élastomère silicone monocomposant alcoxy ne comportant pas d'autre catalyseur de polycondensation, le catalyseur étant utilisé en quantité correspondant à de 0,05 à 0,35 mmol d'étain pour 100 g de la composition.

## Claims

1. Single-component polyorganosiloxane (POS) composition which is stable on storage in the absence of humidity and crosslinks, in the presence of water, to form an elastomer, said composition comprising at least one crosslinkable straight-chain alkoxy polyorganosiloxane POS, a mineral charge and a crosslinking catalyst C of the formula (C): 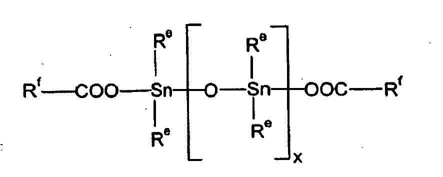 wherein:
- R^{e}, which may be identical or different, denote a straight-chain or branched C₁-C₈ alkyl radical,
- x is 0 or 1,
- when x is 1, the groups R^{f}, which may be identical or different, represent a straight-chain or branched, saturated or unsaturated C₁-C₂₀ alkyl radical optionally comprising one or more oxygen atoms, and optionally comprising one or more ester or ether functions,
- when x is 0, the groups R^{f}, which may be identical or different, represent a straight-chain or branched, saturated or unsaturated C₁-C₂₀ heteroalkyl radical comprising one or more O and optionally comprising one or more ester or ether functions,
the catalyst being present in a quantity corresponding to 0.05 to 0.35 mmol of tin per 100 g of composition.

2. Composition according to claim 1, wherein the quantity of catalyst corresponds to 0.15 to 0.32 mmol of tin per 100 g of composition.

3. Composition according to claim 1 or 2, comprising a catalyst of formula [Bu₂Sn(OOC-C₁₁H₂₃)]₂O.

4. Composition according to one of claims 1 to 3, comprising a catalyst of formula Bu₂Sn[OOCCH₂(OCH₂CH₂)₃ OCH₃]₂.

5. Composition according to one of claims 1 to 4, comprising a catalyst of formula Bu₂Sn[OOCCH=CHCOOR)₂, wherein R is an optionally branched C₂-C₈ alkyl radical.

6. Composition according to claim 5, comprising a mixture of at least two compounds of formula Bu₂Sn[OOCCH=CHCOOR)₂, comprising radicals R having different numbers of carbon atoms.

7. Composition according to any one of claims 1 to 6, comprising a compound of formula (C) as the sole crosslinking catalyst.

8. Composition according to any one of claims 1 to 6, wherein the crosslinking is catalysed by a mixture of at least two compounds of formula (C).

9. Composition according to one of claims 1 to 8, comprising:
-A- at least one crosslinkable straight-chain polyorganopolysiloxane A of formula: 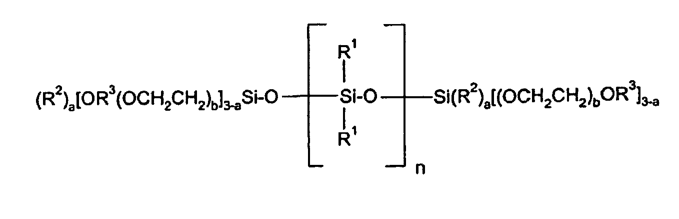 wherein
- the substituents R¹, which may be identical or different, each represent an aliphatic, cyclanic or aromatic, substituted or unsubstituted, saturated or unsaturated, monovalent C₁ to C₁₃ hydrocarbon radical;
- the substituents R², which may be identical or different, each represent an aliphatic, cyclanic or aromatic, substituted or unsubstituted, saturated or unsaturated, monovalent C₁ to C₁₃ hydrocarbon radical;
- the substituents R³, which may be identical or different, each represent a straight-chain or branched C₁ to C₈ alkyl radical or a C₃ to C₈ cycloalkyl radical;
- n has a value sufficient to give POS **A** a dynamic viscosity at 25°C ranging from 1,000 to 1,000,000 mPa.s;
- a is zero or 1;
- b is zero or 1;
**-B-** optionally at least one polyorganosiloxane resin **B** functionalised by at least one alkoxy radical (OCH₂CH₂)_{b}OR³ where b and R³ are defined as hereinbefore and which has, in its structure, at least two different siloxyl motifs selected from among those of formulae (R¹)₃SiO_{1/2} (motif M), (R¹)₂SiO_{2/2} (motif D), R¹SiO_{3/2} (motif T) and SiO₂ (motif Q), at least one of these motifs being a motif T or Q, the radicals R¹, which are identical or different, having the meanings given hereinbefore in relation to formula **(A),** said resin having a content by weight of radicals (OCH₂CH₂)_{b}OR³ ranging from 0.1 to 10%, it being understood that some of the radicals R¹ are radicals (OCH₂CH₂)_{b}OR³;
**-C-** the crosslinking catalyst according to the invention;
**-D-** optionally at least one crosslinker **D** of formula:
(R²)ₐSi[(OCH₂CH₂)_{b}OR³]₄₋ₐ
where R, R³, a and b are as hereinbefore defined,
**-E-** optionally at least one unreactive, nonfunctionalised straight-chain polydiorganosiloxane **E** of the formula: 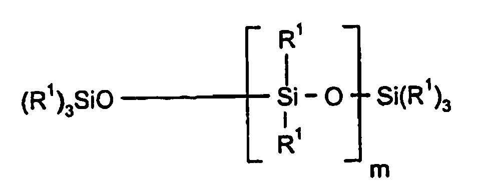 wherein:
- the substituents R¹, which may be identical or different, have the same meanings as those given hereinbefore for the polyorganosiloxane **A;**
- m has a value sufficient to give the polymer of formula **(E)** a dynamic viscosity at 25°C ranging from 10 to 200,000 mPa.s;
**-F-** a mineral charge **F,** notably a reinforcing and/or filling charge, preferably based on silica;
**-H-** an adhesion promoter.

10. Composition according to claim 9, wherein the adhesion promoter is an organosilicic compound carrying one or more hydrolysable groups linked to a silicon atom.

11. Composition according to claim 10, wherein the adhesion promoter further carries one or more organic groups comprising radicals selected from among the amino (or diamino) radicals, (meth)acrylate, epoxy, alkenyl and/or alkyl.

12. Composition according to claim 10 or 11, wherein the adhesion promoter is a silane.

13. Composition according to claim 12, wherein the adhesion promoter is selected from among one of the following silanes, or a mixture of at least two of them:
3-aminopropyltriethoxysilane,
beta-aminoethyl-gamma-aminopropyltriethoxysilane,
beta-aminoethyl-gamma-aminopropylmethyldimethoxysilane,
3-aminopropyltrimethoxysilane,
vinyltrimethoxysilane,
3-glycidyloxypropyl-trimethoxysilane,
3-methacryloxypropyltrimethoxysilane,
propyltrimethoxylsilane,
methyltrimethoxysilane,
ethyltrimethoxysilane,
vinyltriethoxysilane,
3-aminopropylmethyldimethoxysilane,
3-aminopropylmethyldiethoxysilane,
methyltriethoxysilane,
propyltriethoxysilane,
tetraethoxysilane,
tetrapropoxysilane,
tetraisopropoxysilane,
or polyorganosiloxane oligomers containing organic groups of this kind in an amount of more than 20%.

14. Composition according to claim 9, wherein the adhesion promoter is a silicate.

15. Composition according to claim 14, wherein the adhesion promoter is an optionally polycondensed ethyl, propyl or isopropyl silicate.

16. Elastomer capable of adhering to different substrates and obtained by crosslinking and hardening of the composition according to any one of the preceding claims, containing an adhesion promoter.

17. Use of at least one tin compound C of formula (C): 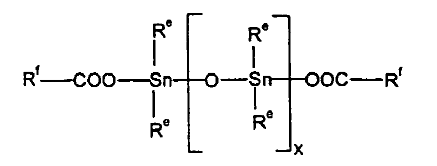 wherein:
- R^{e}, which may be identical or different, denote a straight-chain or branched C₁-C₈ alkyl radical,
- x is 0 or 1,
- when x is 1, the groups R^{f}, which may be identical or different, represent a straight-chain or branched, saturated or unsaturated C₁-C₂₀ alkyl radical optionally comprising one or more oxygen atoms, and optionally comprising one or more ester or ether functions,
- when x is 0, R^{f} which may be identical or different, represent a straight-chain or branched, saturated or unsaturated C₁-C₂₀ heteroalkyl radical comprising one or more O and optionally comprising one or more ester or ether functions,
as the crosslinking polycondensation catalyst of a single-component alkoxy silicone elastomer composition containing no other polycondensation catalyst, the catalyst being used in a quantity corresponding to 0.05 to 0.35 mmol of tin per 100 g of the composition.

## Patentansprüche

1. Einkomponentige Zusammensetzung von Polyorganosiloxan (POS), die in Abwesenheit von Feuchtigkeit lagerungsbeständig ist und, in Gegenwart von Wasser, zu einem Elastomer vernetzt, wobei die Zusammensetzung zumindest ein vernetzungsfähiges lineares Alkoxy-Polyorganopolysiloxan (POS), einen mineralischen Füllstoff und einen Vernetzungskatalysator C mit der Formel (C) umfasst: 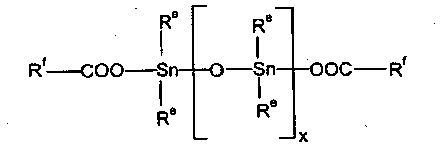 wobei:
- R^{e}, gleich oder verschieden, ein lineares oder in C₁-C₈ verzweigtes Alkylradikales darstellen,
- x 0 oder 1 ist,
- wenn x 1 ist, R^{f}, gleich oder verschieden, ein Alkylradikales, linear oder verzweigt, gesättigt oder ungesättigt, in C₁-C₂₀ darstellen, das gegebenenfalls ein oder mehrere Sauerstoffatome und gegebenenfalls eine oder mehrere Ester- oder Etherfunktionen umfasst,
- wenn x 0 ist, R^{f}, gleich oder verschieden, ein Heteroalkylradikales, linear oder verzweigt, gesättigt oder ungesättigt, in C₁-C₂₀ darstellen, das ein oder mehrere O und gegebenenfalls eine oder mehrere Ester- oder Etherfunktionen umfasst,
der Katalysator in einer Menge entsprechend 0,05 bis 0,35 mmol Zinn pro 100 g Zusammensetzung vorhanden ist.

2. Zusammensetzung nach Anspruch 1, bei der die Menge des Katalysators 0,15 bis 0,32 mmol Zinn pro 100 g Zusammensetzung entspricht.

3. Zusammensetzung nach Anspruch 1 oder 2, mit einem Katalysator der Formel [Bu₂Sn(OOC-C₁₁H₂₃)]₂O.

4. Zusammensetzung nach einem der Ansprüche 1 bis 3, mit einem Katalysator der Formel Bu₂Sn[OOCCH₂(OCH₂CH₂)₃OCH₃]_{2.}

5. Zusammensetzung nach einem der Ansprüche 1 bis 4, mit einem Katalysator der Formel Bu₂Sn(OOCCH=CHCOOR)₂, wobei R ein Alkylradikales in C₂-C₈, gegebenenfalls in verzweigter Form, ist.

6. Zusammensetzung nach Anspruch 5, mit einem Gemisch von zumindest zwei Verbindungen der Formel Bu₂Sn(OOCCH=CHCOOR)₂ mit Radikalen R mit unterschiedlichen Zahlen von Kohlenstoffatomen.

7. Zusammensetzung nach einem der Ansprüche 1 bis 6, die als einzigen Vernetzungskatalysator eine Verbindung mit der Formel (C) aufweist.

8. Zusammensetzung nach einem der Ansprüche 1 bis 6, bei der die Vernetzung durch ein Gemisch von zumindest zwei Verbindungen mit der Formel (C) katalysiert ist.

9. Zusammensetzung nach einem der Ansprüche 1 bis 8, folgendes umfassend:
-A- zumindest ein lineares vernetzungsfähiges Polyorganopolysiloxan A mit der Formel: 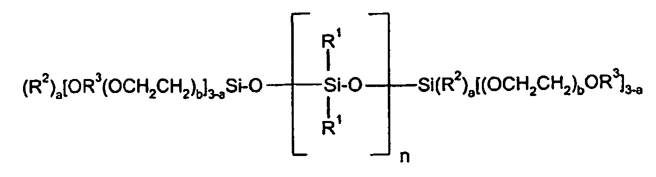 bei der
- die Substituenten R¹, gleich oder verschieden, jeweils ein einwertiges hydrokarbonisiertes Radikales darstellen, gesättigt oder nicht, in C₁ bis C₁₃, substituiert oder nicht substituiert, aliphatisch, alizyklisch oder aromatisch;
- die Substituenten R², gleich oder verschieden, jeweils ein einwertiges hydrokarbonisiertes Radikales darstellen, gesättigt oder nicht, in C₁ bis C₁₃, substituiert oder nicht substituiert, aliphatisch, alizyklisch oder aromatisch;
- die Substituenten R³, gleich oder verschieden, jeweils ein Alkylradikales darstellen, linear oder verzweigt, in C₁ bis C₈, oder ein Zykloalkyl in C₃ bis C₈ darstellen,
- n einen Wert hat, der ausreicht, dem POS A eine dynamische Viskosität bei 25°C von 1.000 bis 1.000.000 mPa.s zu vermitteln,
- a 0 oder 1 ist,
- b 0 oder 1 ist
**-B-** gegebenenfalls zumindest ein Polyorganosiloxanharz B, funktionalisiert durch zumindest ein Alkoxyradikales (OCH₂CH₂)_{b}OR³ mit b, wobei R³ auf die oben gegebene Definition anspricht und in seiner Struktur zumindest zwei verschiedene Siloxylmotive darbietet, ausgewählt unter denjenigen der Formel (R¹)₃SiO_{1/2} (Motiv M), (R¹)₂SiO_{2/2} (Motiv D), R¹SiO_{3/2} (Motiv T) und SiO₂ (Motiv Q), zumindest eines dieser Motive eine Motiv T oder Q ist und die Radikalen R¹, gleich oder verschieden, die oben zur Formel (A) gegebenen Bedeutungen aufweisen, wobei das genannte Harz einen Gewichtsgehalt an Radikalen (OCH₂CH₂)_{b}OR³ von 0,1 bis 10 % aufweist und wobei gilt, dass ein Teil der Radikalen R¹ Radikale (OCH₂CH₂)_{b}OR³ sind,
**-C-** den Vernetzungskatalysator gemäß der Erfindung,
**-D-** gegebenenfalls zumindest ein Vernetzungsmittel D mit der Formel:
(R²)ₐSi ((OCH₂CH₂)_{b}OR³]₄₋ₐ
mit R², R³, a und b so wie oben definiert,
-E- gegebenenfalls zumindest ein lineares nicht reaktives und nicht funktionalisiertes Polydiorganosiloxan E mit der Formel: 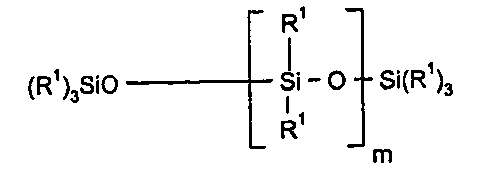 wobei
- die Substituenten R¹, gleich oder verschieden, die gleichen Bedeutungen haben, wie sie oben für das Polyorganosiloxan A gegeben wurden,
- m einen Wert hat, der ausreicht, um dem Polymer mit der Formel (E) eine dynamische Viskosität bei 25°C von 10 bis 200.000 mPa.s zu vermitteln,
**-F-** einen mineralischen Füllstoff F, insbesondere einen Füllstoff zur Verstärkung und/oder Lückenfüllung, vorzugsweise auf der Basis von Silikatmasse,
**-H-** einen Adhäsionsbeschleuniger.

10. Zusammensetzung nach Anspruch 9, bei der der Adhäsionsbeschleuniger eine siliziumorganische Verbindung mit einer hydrolisierfähigen Gruppe oder Gruppen ist, die an ein Siliziumatom gebunden sind.

11. Zusammensetzung nach Anspruch 10, bei der der Adhäsionsbeschleuniger außerdem eine organische Gruppe oder organische Gruppen mit Radikalen aufweist, die aus der Gruppe von Aminradikalen (oder Diaminradikalen), (Meth)Acrylat, Epoxy, Alkenyl und/oder Alkyl ausgewählt sind.

12. Zusammenfassung nach Anspruch 10 oder 11, bei der der Adhäsionsbeschleuniger ein Silan ist.

13. Zusammensetzung nach Anspruch 12, bei der der Adhäsionsbeschleuniger unter einem der folgenden Silane oder einem Gemisch von zumindest zwei von diesen Silanen ausgewählt ist:
- 3-Aminopropyltriethoxysilan,
- Beta-aminoethyl-gamma-aminopropyltrimethoxysilan,
- Beta-aminoethyl-gamma-aminopropylmethyldimethoxysilan,
- 3-Aminopropyltrimethoxysilan,
- Vinyltrimethoxysilan,
- 3-Glycidyloxypropyl-trimethoxysilan,
- 3-Metacryloxypropyltrimethoxysilan,
- Propyltrimethoxysilan,
- Methyltrimethoxysilan,
- Ethyltrimethoxysilan,
- Vinyltrieethoxysilan,
- 3-Aminopropylmethyldimethoxysilan,
- 3-Aminopopylmethyldiethoxysilan,
- Methyltrieethoxysilan,
- Propyltrieethoxysilan,
- Tetraethoxysilan,
- Tetrapropoxysilan,
- Tetraisopropoxysilan,
oder ausgewählt ist von Polyorganosiloxanoligomeren, die organische Gruppen mit einem Gehalt über 20 % enthalten.

14. Zusammensetzung nach Anspruch 9, bei der der Adhäsionsbeschleuniger ein Silikat ist.

15. Zusammensetzung nach Anspruch 14, bei der der Adhäsionsbeschleuniger ein Ethyl-, Propyl- oder Isopropylsilikat, gegebenenfalls in polykondensierter Form, ist.

16. Elastomer mit der Fähigkeit an verschiedenen Substraten zu haften und gewonnen durch Vernetzung und Härtung der Zusammensetzung nach einem der vorhergehenden Ansprüche, einen Adhäsionsbeschleuniger enthaltend.

17. Verwendung zumindest einer Zinnverbindung C mit der Formel (C): 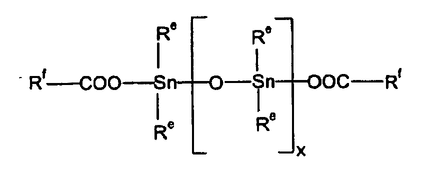 wobei
- R^{e}, gleich oder verschieden, ein Alkylradikales linear oder verzweigt in C₁-C₈, darstellen,
- x 0 oder 1 ist,
- wenn x 1 ist, R^{f}, gleich oder verschieden, ein Aklylradikales darstellen, linear oder verzweigt, gesättigt oder ungesättigt, in C₁-C₂₀, mit gegebenenfalls einem oder mehreren Sauerstoffatomen und gegebenenfalls mit einer oder mehreren Ester- oder Etherfunktionen,
- wenn x 0 ist, R^{f}, gleich oder verschieden, ein Heteroalkylradikales darstellen, linear oder verzweigt, gesättigt oder ungesättigt, in C₁-C₂₀, mit einem oder mehreren O und gegebenenfalls mit einer oder mehreren Ester- oder Etherfunktionen,
als Katalysator zur Vernetzung durch Polykondensation einer einkomponentigen Alkoxysilikonzusammensetzung, die keinen anderen Polykondensationskatalysator aufweist, wobei der Katalysator in einer Menge von entsprechend 0,05 bis 0,35 mmol Zinn pro 100 g der Zusammensetzung verwendet wird.
